# EUROPEAN PATENT SPECIFICATION

(11) **EP 1 393 522 B1**
(45) Date of publication and mention of the grant of the patent: **05.11.2008**
(21) Application number: 02732908.5
(22) Date of filing: 30.05.2002
(51) Int. Cl.: H04L 29/06

(54) **Security in area networks**
Sicherheit in Netzwerken
Sécurité dans des réseaux

(30) Priority: 07.06.2001 GB 0113902
(43) Date of publication of application: 03.03.2004
(60) Divisional application: 05076839.9
(73) Proprietor: Nokia Corporation, 02150 Espoo (FI)
(72) Inventor: EDNEY, Jonathan, Willingham, Cambridgeshire CB4 5ES (GB); HAVERINEN, Henry, FIN-33720 Tampere (FI)
(74) Representative: Ruuskanen, Juha-Pekka
(86) International application number: PCT/GB2002/002557
(87) International publication number: WO 2002/100062

(56) References cited:
- WO-A-01/19036
- US-A- 6 154 839
- GIACOMETTI S ET AL: "TUNNELLING EFFECTIVENESS IN THE ACCESS ENVIRONMENT" 38TH EUROPEAN TELECOMUNICATIONS CONGRESS. PROCEEDINGS NETWORKING THE FUTURE. UTRECHT, NL, AUG. 24 - 28, 1999, LONDON: IBTE, GB, 24 August 1999 (1999-08-24), pages 101-105, XP000847178

## Description

The invention relates generally to the field of computer networks, and in particular to the field of area networks.

A computer network can be defined as a group of two or more computer systems linked together. In this definition, a computer system is taken to mean a complete working computer, including not only the computer, but also any software or peripheral devices that are necessary to make the computer function. For example, every computer system requires an operating system and printing devices are generally required to provide hard copies of computerised information.

Computer networks can be categorised in a number of ways, for example, in terms of topology (geometric arrangement of devices in a network e.g. bus, star and ring), media (the means by which devices are connected e.g. coaxial/fibre optic cables or radio waves), protocol (a common set of rules for sending data e.g. Ethernet), or architecture (peer/peer or client/server). It is possible that the protocols also determine whether the computer network uses peer/peer or client/server architecture and thus such simple categorisation often leads to a computer network falling into more than one category.

In addition to the above mentioned categories, computer networks can be grouped in terms of a geographical region over which the network is distributed. Such a categorisation leads to the category of Area Network, and includes Local Area Networks (LANs), Wide Area Networks (WANs) and Metropolitan Area Networks (MANs). In the case of LANs, the computers in the network are geographically close together, for example, in a single building or group of buildings. In the case of WANs, the computers are farther apart and are connected by telephone lines or radio waves. One LAN can be connected to other LANs over any distance via telephone lines and/or radio waves to also provide a WAN. A MAN is a network designed for towns and cities.

The present invention relates to the field of area networks and includes all the above mentioned area networks. In addition, as such simple categorisation often leads to a computer network falling into more than one category, it is important to note that the present invention does not exclude applicability in networks which also fall into other network categories. Thus, the present invention relates to area networks regardless of the topology, media, protocol or architecture of the network. The present invention is also applicable to Wireless Local Area Networks (WLAN or LAWN), a sub-class of LANs which use high frequency radio waves rather than wires for communication between certain network devices.

Area networks have been designed to enable several computers to be connected together in order to share information and resources. The network protocols, operating systems and application software for the associated network computers have been designed on the assumption that it is intended that two or more computers on the same area network can share information and be notified of each others existence on the network. Such an arrangement is only suitable for situations in which users (clients) of the area network have business/personal relationships. However, there are opportunities to use the advantages provided by area networks, and LANs in particular, in situations where clients have no personal/business relationships (e.g. in a public area network). One example of such an application is an airport business lounge in which a LAN/WLAN may be provided to allow passengers (clients) to access the Internet, whilst at the same time preventing access to another passenger's computer connected to the same LAN/WLAN. In such security sensitive applications, where clients are often new to a network and have no prior business or personal relation with each other or the network, it is desirable that communications, in the form of transmitted data packets, are maintained private (i.e. the isolation of one client's transmissions from another client) whilst still providing ease of network access to such users, ideally using commonly used communication protocols. Some degree of control also needs to be provided over client access to the network and the duration of that access.

Taking the access control requirement first, this can be achieved by mediating area networks transmissions by one or more controlling computers, commonly known as Access Controllers (ACs), designed to monitor and control network usage. These are provided at a position in the network architecture to receive client data packets without the data packets first travelling too far through the network. Such positions are architecturally immediately following access point devices, the access point devices being provided to allow client device access to the network. Thus, the effective functioning of ACs in present solutions is architecture dependent i.e. the prevention of transmissions bypassing the AC is by the architectural design of the network.

With regard to security, security efforts in existing LANs have resulted in area networks arranged to only allow transmission of data packets from network recognised client computers. This may be done by arranging either the access point device or the AC to consider a unique client device classifier (e.g. MAC address) or authorisation code (e.g. password) transmitted by the client device as part of the transmission data packet. However, such arrangements only check whether a client device is authorised to access the network and do not consider whether the device to which access is being requested is permitted. So, this solution, in isolation, does not necessarily prevent someone who is authorised to use the network, or has altered their device so that it provides a client device classifier or authorisation code recognised by the network, from obtaining access to private areas of the network.

The aforementioned consideration of whether the client device is permitted access to the network also has other disadvantages. Generally speaking, communications between devices may be by means of unicast (between specific identified singular devices, "point to point"), multicast (between one or more devices and a set of specific identified devices) or broadcast (between a single device and one or more non-specific devices) transmissions. Disadvantageously, the consideration of whether the client device is permitted access to the network does not prevent a multicast/broadcast transmission from a network recognised client device from permeating throughout the area network, and accordingly this has implications on client privacy. In addition, it may be that a number of network recognised client devices are connected to the area network using the same access point device. It is currently possible for such client devices to communicate with each other by unicast/multicast/broadcast transmissions passing through the common access point device without the transmissions having to enter into the core of the area network. Such transmission paths bypass network devices in the core of the network and thus inhibit control and monitoring of network access and usage. Client privacy may be also reduced, in particular, by the receipt of unsolicited multicast/broadcast transmissions from neighbouring client devices. Furthermore, as has been mentioned previously, the effective functioning of ACs in present networks is architecture dependent. Therefore, unless the ACs are suitably positioned, it is also possible in current network arrangements for client devices connected to adjacent access point devices to communicate with one another using unicast/multicast/broadcast transmissions which bypass the AC.

The Internet Protocol version 4 (IPv4), in particular, is a widely used communications protocol which allows the use of Address Resolution Protocol (ARP) to resolve a target node's, for example a client or network device, link-layer address from its IP address. In fact, ARP does not operate over IPv4 but ARP packets are special link-layer packets. In the normal use of ARP, a node, such as a client device, that needs to resolve the link-layer address that corresponds to a target IP address broadcasts an ARP Request. When the target node, such as an AC, recognises that its link-layer address is being queried with an ARP Request, it unicasts an ARP Reply to the sender of the ARP Request.

A number of forms of ARP exist. A Gratuitous ARP is an ARP packet sent by a node in order to spontaneously cause other nodes to update an entry in their ARP table. It can be used for example if the link-layer address changes. The ARP specification requires that any node receiving any ARP packet must update its local ARP table with the sender's IP and link-layer addresses in the ARP packet, if the receiving node has an entry for that IP address already in its ARP table. This requirement in the ARP protocol applies even for ARP Request packets, and for ARP Reply packets that do not match any ARP Request transmitted by the receiving node. Another form of ARP is Proxy ARP in which a ARP Reply is sent by one node on behalf of another node which is either unable or unwilling to answer its own ARP Requests. The sender of a Proxy ARP supplies some configured link-layer address (generally, its own) as the target link-layer address. The node receiving the Proxy ARP will then associate this link-layer address with the IP address of the original target node. A Reverse Address Resolution Protocol (RARP) can be used to resolve an IP address from a link-layer address.

Clients using a WLAN, in particular, need to be able to use ARP in order to send and receive unicast IP packets. However, ARP does not have any builtin security and free use by clients, would provide opportunities for a malicious client to disturb the operation of the access network. For example, a malicious client could alter the ARP tables of all the nodes on the network simply by broadcasting a false gratuitous ARP packet on behalf of the access router.

US-A-6,154,839 discloses a system that translates addresses in a data packet based upon a user identifier in the data packet. The system uses the user identifier to look up communication privileges associated with the user. If the communication privileges allow the user to communicate with the destination node, the system replaces the source address in the data packet with a privileged address, and forwards the data packet to the destination node.

Giacometti S et al "Tunnelling Effectiveness in the Access Environment" 38th European Telecommunications Congress, Proceedings Networking the Future, Utrecht, NL, Aug. 24-28 1999, London: IBTE, GB, 24 August 1999 (1999-08-24), pages 101-105, XP000847178 discloses the use of tunnelling in the access environment.

The present invention aims to address the previously mentioned shortfalls of the prior art.

This object is solved by the invention as claimed in the independent claims. Preffered embodiments are defined by the dependent claims.

Accordingly, in a first aspect, the invention provides an access point device arranged to receive data packets from one or more client devices and transmit them along an area network wherein the access point device comprises security means **characterised in that** the security means is arranged to configure the client data packets such that they are directed only to one or more permitted area network device(8), said network device(s) being access controller(s) which are available for general access, whereby direct communication between the client devices is blocked.

Thus, the invention provides an access point device which regardless of the original destination of the data packet, ensures that data packets are redirected to a permitted network device and away from a restricted network device which may include a client device. Accordingly, and unlike the prior art, the invention assures delivery to one or more specific permitted devices regardless of the position of the permitted network devices in the network, and thus the position of the permitted network devices in the network architecture is irrelevant. This assurance of delivery to specific network devices provides improved control and monitoring of access and usage of the network, as the bypass of these network devices is obviated. This is particularly important if clients are to be charged based area network usage. Another advantage is that the solution is provided solely in the access point device and thus client devices do not require re-configuration. With the solution being provided only by an improved access point device, the present invention can be easily and cost effectively retro-actively fitted to existing area networks. The solution is also relatively simple and thus un-complicated.

Transmissions along the area network may include transmissions to/from/within the wired and/or wireless parts of the area network, including transmissions which do not significantly enter the wired part of the network e.g. in certain cases when two or more client devices are connected to the same access point device.

In certain cases, it may be simpler to completely regenerate a data packet for transmission along the network and discard the original client data packet. For example, in the case of a broadcast transmission from a client device being changed to a unicast transmission directed to the AC. However, the configuration is preferably conducted by substituting/inserting a unique classifier of a permitted area network device, such as the access controller MAC address or IP address, into the client data packet. As the classifier may be contained in any layer of the network communications protocol, the configuration of the data packet will be conducted in the appropriate layer and not be limited to any particular layer of the network protocol. Although the permitted area network device may be a network access controller it is, more generally speaking, a device which is not restricted from general access, and thus is a device to which all data packets can be safely channelled.

As an operational example, unicast transmissions, whether they are directed to a permitted network device or not, will be re-configured by the access point device to only go to the permitted device. Furthermore, the access point device will also re-configure broadcast/multicast client data packets to a permitted network device and thus away from other client devices connected to the area network. Unwanted solicitation by neighbouring clients connected to the same, or different, access point devices will accordingly be prevented.

In one embodiment, the security means is configured to consider the destination of the client data packet, and arranged to only configure the data packet if it is directed to a restricted area of the network i.e. not to a permitted area network device. Thus, this embodiment avoids the un-necessary modification of a client data packet already directed to a permitted area network device.

The consideration of the destination of the data packet may simply comprise comparison with a list of classifiers for permitted network devices which are recorded onto the security means, and only if the client data packet contains a classifier of a permitted network device is the data packet not re-configured. The classifier is essentially the destination address of a permitted network device and may be the hardware address of the permitted network device (e.g. MAC address contained in the data link-layer of the communications protocol) or a corresponding software address for the permitted network device (e.g. contained in the network/applications layer of the communications protocol). Generally speaking, the permitted network device classifier may be in any of the layers of the communications protocol.

It would be preferable to configure the security means to also forward the original destination address (or addresses) of the data packet so that the data packet may be subsequently forwarded, for example, following authentication of the client device sending the transmission.

The network may be configured to use only one transmission form e.g. unicast transmissions. However, to deal with various data packet transmission forms, the access point device will preferably be configured to be able to differentiate between the different data packet forms and differentially modify the various data packet forms to be directed to a permitted network device. For example, it will be possible with this embodiment to identify whether the data packet is of a unicast, multicast, or broadcast transmission form, or even what particular form of unicast, multicast, or broadcast transmission (e.g. gratuitous ARP), and accordingly differentially modify the data packets for onward transmission to a permitted network device.

The differentiation of data packets can be conveniently conducted by the comparison of client data packet data fields, or parts of data fields, with those of network permissible transmission forms and configuring the access point device to make appropriate modifications to the client data packet to direct the transmission form to a permitted network device. The data fields may be contained in any layer of the network communications protocol and may include the link-layer header, the IP header, and the transport protocol headers (UDP and TCP).

As a unicast data packet may require a different change in configuration for onward transmission than a multicast/broadcast data packet, the access point device would preferably be arranged to analyse these differing transmission forms and adapt each of these differing forms to provide data packets to the network with the same construction and overall data packet length. In this case, network protocols can remain within industry standards. However, the client data packets may be modified by the insertion of data fields into the data packet. In this case, the data packet will have an increased length and may also have a different construction and thus result in the use of a non-standard network protocol. In such a case, the access point device may be provided with means to configure data packets from the area network specific protocol format into an industry standard protocol, and vice versa. In this way, client devices can still operate using an industry standard protocol.

Preferably, the client data packet received by the access point device comprises protocol fields conforming to a standard protocol and wherein the security means is arranged to alter the content of one or more of the protocol fields to produce a modified client data packet which still conforms to a standard protocol. The client data packet received by the access point device and modified client data packet may conform to the same standard protocol. The client data packet received by the access point device and modified client data packet may conform to different standard protocols.

In the case where the area network uses an industry standard protocol, increased security may be provided by configuring the access point device to accept a non-standard protocol for transmissions between the client device and the access point device, and also by providing the access point device with means to configure the non-standard protocol client device transmissions into industry standard protocol transmissions for the area network, and vice versa. In this way, apart from the access point device, the remaining area network devices can be within the scope of industry standards. Of course, the client device would need to be provided with the non-standard protocol, which may be provided in the form of hardware, software or a combination thereof. For example, a client may purchase a PCMCIA card, containing the non-standard protocol, for insertion into their device. If the PCMCIA card allows usage of the area network for a pre-determined time, or at least, is one which monitors the client usage of the network, control and monitoring can be provided over both which clients are authorised to use the area network, and the duration of that usage. Filter means provided in the access point device or the AC may also be modified to analyse whether the client device transmissions are from a client device using an authorised PCMCIA card.

In the case where the access point device is able to differentiate between different data packet transmission forms, the access point device may be advantageously configured to selectively modify certain data packets for onward transmission, and selectively exclude other data packets from network transmission. Thus, this embodiment will be able to, for example, identify a broadcast transmission and exclude it from network transmission, and identify a unicast transmission directed to a restricted network device and configure this data packet so that it is directed to a permitted network device. For example, a Dynamic Host Configuration Protocol (DHCP) data packet can be recognised by observing that the data packet is an IP packet that encapsulates UDP and the destination port field contains the value 67, and thus data packets recognised as using this protocol may be permitted access to the network. Whether to permit or deny access to the network for certain forms of transmissions will be based on local policy considerations which includes selection based on which client device originated the data packet. Thus, it will be possible to exclude all or some transmissions forms from a particular device.

In a modified embodiment, the access point device may be configured to send a reply data packet back to the client device in response to a particular form of data packet transmission from the client device and/or in response to a data packet destined for a non-permitted (restricted) network device. For example, the access point device may send a Proxy ARP reply transmission, using an appropriate target link-layer address, back to client device which originated a ARP Request transmission, and at the same time not forward the ARP Request into the network. As the target link-layer address would correspond to a permitted network device, further client transmissions should be unicast transmissions directed to the permitted network device having the appropriate link-layer address. Alternatively, the access point device may be configured to simply send a reply data packet informing the client that such forms of transmission are not permitted, or are restricted, on the area network.

The access point device may be arranged to reply on behalf of a network device, preferably a restricted network device. The access point device may comprise security means arranged to provide mapping information of one or more permitted network devices to a client device in response to a client data packet concerning a restricted network device.

Client data packets concerning a restricted network device are not limited to client data packets specifically addressed to one or more restricted devices but may include client data packets which would be received by a restricted network device (and possibly also permitted network devices) e.g. a broadcast transmission in the case of an ARP request.

Specifically, the security means may be arranged to send an ARP transmission back to a client device in response to a data packet destined for a restricted network device.

The access point device may comprise security means arranged to send a proxy ARP Reply transmission back to a client device in response to an ARP request from the client device, said Proxy ARP Reply containing the link-layer address of one or more permitted network devices. The link-layer address may be the MAC address.

Preferably, the security means is configured to accept a unicast ARP Reply from a client device in response to an authorised ARP Request.

In another embodiment, the access point device may be configured to seek permission from a client device as to whether the access point device is to forward a particular transmission form, and in the positive case, the access point device is configured to forward such transmissions. The seeking of permission may also be for authorisation to transmit a transmission from a particular client device. Thus, the access point device can adapt its local privacy policy based on the wishes of the client. The seeking of permission and/or the forwarding of the transmission may be carried out by a permitted network device, such as an AC.

In another embodiment, the security means is configured to consider a characteristic of the data packet and based on the characteristic configure the data packet to be directed to a particular permitted area network device. Thus, this embodiment would differentially modify the data packet destination based on a characteristic of the data packet. Such a characteristic includes a unique classifier for each of the client devices (e.g. MAC address), so that all transmissions from a particular client device are directed to a specific permitted network device. In this version, it is possible to direct all information about usage by a particular client device to one specific location, without this information having to be subsequently collated from a number of different permitted network devices.

In a further embodiment, the security means is arranged to monitor the volume of transmissions sent to a particular permitted network device within a particular time and re-direct data packets to a different permitted network device according to the volume of transmissions sent to the particular permitted network device within the time. Such an arrangement allows resource sharing throughout the network so that particular permitted network devices are not overburdened or under-utilised. The access point devices may also be arranged to communicate with one another, and/or the permitted network devices, to determine optimum resource sharing.

In another aspect, the invention provides an access point device arranged to reply on behalf of a network device, preferably a restricted network device. Preferably, the invention provides an access point device arranged to receive data packets from one or more client devices and transmit them along an area network characterised wherein the access point device comprises security means arranged to provide mapping information of one or more permitted network devices to a client device in response to a client data packet concerning a restricted network device.

As mentioned previously, client data packets concerning a restricted network device are not limited to client data packets specifically addressed to one or more restricted devices but may include client data packets which would be received by a restricted network device e.g. a broadcast transmission.

In one embodiment, the security means is arranged to send an ARP transmission back to a client device in response to a data packet destined for a restricted network device.

Preferably, the security means is arranged to send a proxy ARP Reply transmission back to a client device in response to an ARP request from the client device, said Proxy ARP Reply containing the link-layer address of one or more permitted network devices. The link-layer address may be the MAC address.

Preferably, the security means is configured to accept a unicast ARP Reply from a client device in response to an authorised ARP Request.

The invention may be implemented by hardware, software or a combination thereof. In addition, it may be used in combination with some or all of the aforementioned prior art solutions. For example, the access point device may be configured to comprise authentication means to initially authenticate client devices, by password entry and/or checking the client device classifier contained in the data packet. If the authentication means identifies that the data packet, or more generally the client device, is recognised by the network (i.e. the client device is permitted access to the area network), the data packet is forwarded to the security means.

The invention also encompasses all corresponding methods of providing security to an area network, and area networks comprising the access point devices. All combinations of the aforementioned and subsequently mentioned embodiments of the invention are also within the scope of the invention.

Specific embodiments of the present invention will now be described with reference to the following figures in which :
Figure 1 is a schematic illustration of a portion of a WLAN showing client devices interfacing with the WLAN and showing the closed transmission paths between client devices and the WLAN portion according to the present invention; and
Figure 2 is a schematic illustration of the arrangement of Figure 1 showing the secure permitted transmission paths between client devices and the WLAN portion according to the present invention.

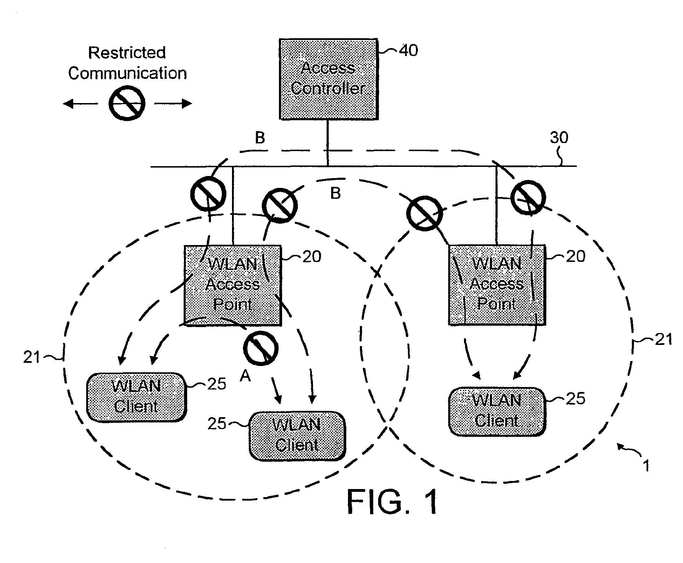

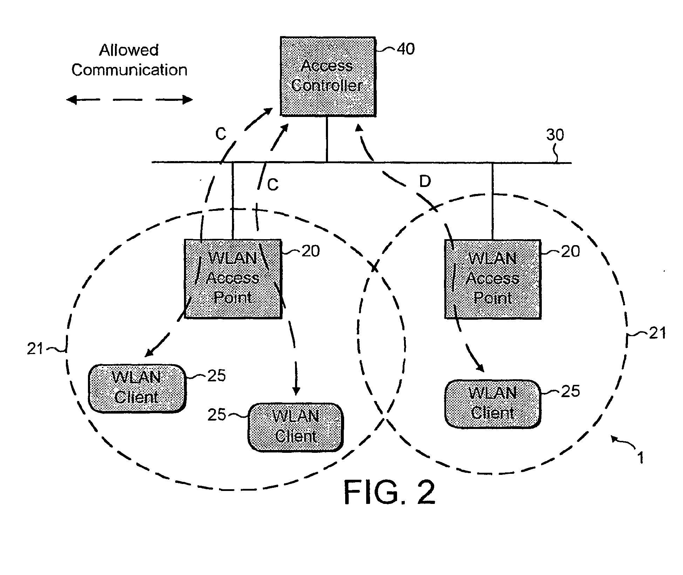

A portion 1 of a typical WLAN is shown in Figures 1 and 2. The WLAN comprises a number of access point devices 20 each having a coverage area 21 over which they can send/receive transmissions to/from one or more client devices 25 (such as laptop computers). There is overlap of adjacent coverage areas 21, and the area network is configured such that one client device 25 can roam and move to an adjacent coverage area 21 without being disconnected from the area network.

The access point devices 20 are each connected to a common transmission line 30. Access controllers 40, designed to control access to the network, are connected to the transmission line 30 at various locations along the length of the transmission line 30. They essentially act as a gateway to the rest of the area network (not shown) by sending/receiving transmissions to/from client devices 25 along transmission line 30. They are also used to configure the network to allow roaming of client devices 25 between adjacent access points devices 20.

It is currently possible for client devices 25 connected to the same access point device 20 to communicate with one another (Figure 1, path A) through the common access point 25 without the transmissions being intercepted by the access controller 40. Such communications may be by unicast, multicast, or broadcast transmissions. It is also possible for client devices 25 connected to adjacent access point devices 20 to communicate with one another (Figure 1, paths B), again by unicast, multicast, or broadcast transmissions, without the transmissions being intercepted by the access controller 40. For example, in the case of a ARP broadcast, a data packet is broadcast to all devices 25 connected to the WLAN. The data packet contains the IP address the sender is interested in communicating with. Most devices 25 ignore the data packet. However, the target device 25, recognises the IP address in the data packet with its own, and returns an answer.

The aim of the invention is to restrict communications to only permitted network devices, and in particular, to restrict those transmissions sent along communication paths A and B (Figure 1). Certain restrictions may also be applied to transmissions along communication paths C, D (Figure 2), between a client device 25 and the access controller 40.

The access point devices 20 are arranged to receive data packets from one or more client devices 25 and transmit them along the area network. The access point device 20 is further arranged to configure the client data packets such that they are directed only to one or more permitted area network device(s), in this case access controllers 40. One way of doing this is to add the destination address of the access controller 40 to the data packet. Another way, is to replace the destination address in the data packet with the destination address of the access controller 40. The latter method would be particularly useful for re-directing unicast transmissions, directed to a network restricted device, to a permitted network device and is the preferred method of implementing the invention, particularly in combination with an access point device 20 further arranged to consider the transmission form of an incoming client data packet. Thus, if the data packet is a unicast transmission directed to a permitted access controller 40, the access point device 20 is arranged to forward the client data packet without re-configuration. However, if the data packet is not a unicast transmission form or is a unicast transmission to a network restricted device, then the access point device 20 is configured to restrict access of such transmissions based on local policy considerations e.g. in certain cases it may be that a broadcast transmission is allowed from an authorised client device 25.

To determine whether the data packet is destined for a network permitted access controller 40, the access point device 20 comprises a list of address for network permitted devices (e.g. IP address or MAC address), which comprises the addresses of a number of permitted access controllers 40. This information may change periodically, and therefore the access point device 20 is configured to be able to update this information. Such an access point device 20 may be modified to also comprise a list of client device MAC addresses corresponding to client devices 25 which are authorised to access the network i.e. they are recognised by the network. This information would also change periodically and thus the access point device 20 is further configured such that this list may be periodically updated.

In the operation of such a modified device, the access point device 20 will initially consider whether the data packet contains the MAC address of a network recognised client device 25. If the data packet is from a network recognised client device, the access point device 20 further considers the destination of the data packet. Then, if the data packet is of the correct form (e.g. unicast) and is also directed to a permitted access controller 40, the data packet is forwarded to the access controller 40.

In one version which differentiates between different data packet transmission forms, the access point device 20 also comprises a list of a number of data fields against which the client data packets are to be compared. The data fields would include MAC multicast address, protocol header offset position, protocol header mask bytes and protocol header match byte. In such a case, the access point device 20 is configured to cross check these fields with those in a received data packet, and based on the analysis determine what to do with the data packet. For example, by analysing the different data packet fields, the access point device 20 can be configured to differentiate between broadcast, multicast and DHCP data packets and accordingly discard all broadcast and multicast transmissions by default, but forward DHCP packets to a local DHCP server.

This consideration of the form of the client data packet and also the original destination of the data packet can be developed to produce further embodiments. This includes configuring the access point device 20 so that it is able to differentially modify client device data packets for onward network transmission based on the form and destination of the original data packet. So, for example, the access point device 20 will be able to re-configure, and thus re-direct, a unicast data packet directed to a network restricted access controller 40, or to another client device 25, to a permitted access controller 40, and also be able to restrict network access generally for a broadcast transmission.

The modification of data packets may even take the form of generating a unicast transmission from a broadcast transmission. For example, in the case of an ARP broadcast from a client device 25, the access point device 20 is arranged to re-configure the data packet so that it includes the IP address (or MAC address) of the access controller 40. The transmission is thus directed only to the permitted access controller 40 and is not generally broadcast throughout the area network. In essence, the access point device 20 configures the broadcast transmission into a unicast transmission. In certain cases, the access controller 40 can be configured to consider whether the ARP broadcast was sent from an authorised client device 25, and in such a case, forward the broadcast transmission throughout the area network. The access controller 40 would, of course, be required to remove the access controller address from the data packet prior to the transmission of the data packet throughout the area network.

In certain embodiments, the access point device 20 is configured to send a proxy ARP transmission back to the client device 25 in response to an ARP request from the client device 25. In this way, the access point device 20 replies on behalf of another device i.e. on behalf of the device which the client device 25 was intending to communicate with. In one example of such an arrangement, the access point device 20 is configured to not forward any broadcast ARP packets received over the WLAN interface. Instead, the access point device 20 discards all received broadcast ARP packets but sends a proxy reply to received ARP Requests using an appropriate target link-layer address of an appropriate router, which in this case is that of the access controller 40. This allows the clients devices 25 to safely resolve target link-layer addresses.

The routers and other servers on the wired part of the WLAN also need to resolve target link-layer addresses of WLAN client devices 25. This is also conveniently done by using ARPing. In this case, the access point device 20 is configured to forward these ARP Requests to the clients devices 25. Since the clients send the corresponding ARP Replies by unicast transmission to an allowed link-layer address, the access point device 20 forwards them just like any other unicast data packets. However, yet better security can be achieved by only allowing the client devices 25 to send unicast ARP Replies in response to ARP Requests. This prevents malicious users from sending unsolicited false unicast ARP Replies (e.g. a gratuitous ARP) to the local routers and servers in order to modify their ARP tables.

In another embodiment, the access point device 20 is configured to be able to send data packets to a number of different access controllers 40, and is configured to determine which access controller 40 the data packet should be sent based on local policy considerations such as resource sharing or billing requirements. For example, the access point device 20 may be configured to monitor the number of transmissions sent to a particular access controller 40, and if it is considered that the access controller 40 is over-burdened, then the access point device 20 is configured to re-direct transmissions to a different access controller 40. The access point device 20 may also be configured to consider the MAC address contained in a client data packet, and forward all transmissions containing this MAC address to one particular access controller 40.

In summary, the invention provides a means by which authorised communication can be maintained between client devices 25 and one or more permitted network devices (such as the access controller 40) whilst direct communication between the client devices 25 is effectively blocked. If data does not bypass the permitted network devices and is always transferred to them, then accurate billing mechanisms can be provided to keep track of account usage. Increased freedom in the design of network architecture is also enabled by all network transmission being specifically directed to permitted areas of the network. It should be noted that the present invention provides a solution which is based on the destination of data packets. This is contrary to prior art teachings which have considered the source of data packets. In addition, the present invention conveniently and simply addresses the numerous security problems with the disparate prior art solutions.

## Claims

1. An access point device (20) arranged to receive data packets from one or more client devices (25) and transmit them along an area network (1) wherein the access point device (20) comprises security means **characterised in that** the security means is arranged to configure the client data packets such that they are directed only to one or more permitted area network devices (40), said network devices (40) being access controllers which are available for general access, whereby direct communication between the client devices is blocked.

2. The access point (20) according to claim 1, wherein the security means is arranged to completely regenerate a data packet for transmission along the network (1) and discard the original client data packet and include a unique classifier of the permitted area network device (40) into the regenerated data packet.

3. The access point (20) according to claim 1, wherein the security means is arranged to substitute/insert a unique classifier of a permitted area network device (40), such as a permitted area network device MAC address or IP address, into the client data packet.

4. The access point device (20) according to any one of the preceding claims, wherein the security means is configured to consider the destination of the client data packet, and arranged to only configure the data packet if it is directed to a restricted network device.

5. The access point device (20) according to claim 4, wherein the security means comprises a list of classifiers for permitted network devices (40) and the security means is arranged to compare the destination of client data packets with the list, and re-configure the client data packet for onward transmission to a permitted device (40) if the client data packet contains a classifier of a restricted network device.

6. The access point device (20) according to any of the preceding claims, wherein the security means is arranged to also forward the original destination address, or addresses, of the data packet so that the data packet may be subsequently forwarded.

7. The access point device (20) according to any of the preceding claims, wherein the security means is configured to differentiate between the different data packet forms and differentially modify the various data packet forms to be directed to a permitted network device (40).

8. The access point device (20) according to claim 7, wherein the security means is arranged to differentiate between data packet transmission forms by comparison of client data packet data fields, or parts of data fields, with those of network permissible transmission forms recorded on the security means, and wherein the security means Is further configured to make appropriate modifications to the client data packet to direct the transmission form to a permitted network device (40).

9. The access point device (20) according to claim 8, wherein the security means is arranged to analyse the differing transmission forms and adapt each of these differing forms to provide data packets to the network (1) with the same construction and overall data packet length.

10. The access point device (20) according to claims 1 to 9, wherein the security means is arranged to modify the client data packet by the insertion of data fields into the data packet.

11. The access point device (20) according to claim 10, wherein the security means is arranged to configure data packets using an industry standard protocol into a network specific protocol, and vice versa.

12. The access point device (20) according to any claim dependent on claim 7, wherein the security means is arranged to selectively modify certain data packets for onward transmission, and selectively exclude other data packets from network transmission.

13. The access point device (20) according to claim 12, wherein the security means is configured to send a reply data packet back to the client device in response to a particular form of data packet transmission from the client device (25) and/or in response to a data packet destined for a restricted network device.

14. The access point device (20) according to claim 12, wherein the security means is configured to send, in response to identifying a particular transmission form, a reply data packet informing the client that the particular transmission form is not permitted, or is restricted, on the area network (1).

15. The access point device (20) according to any claim dependent on claim 7, wherein the security means is configured to seek permission form a client device (25) as to whether the access point device (20) is to forward a particular transmission form, and in the positive case, the access point device (20) is configured to forward such transmissions.

16. The access point device (20) according to claim 1, wherein the access point device (20) is arranged to reply on behalf of a network device.

17. The access point device (20) according to claim 16, wherein the network device is a restricted network device.

18. An access point device (20) according to any preceding claim, wherein the access point device (20) comprises security means arranged to provide mapping information of one or more permitted network devices (40) to a client device (25) in response to a client data packet concerning a restricted network device.

19. The access point device (20) according to claim 18, wherein the security means is arranged to send an ARP transmission back to a client device (25) In response to a data packet destined for a restricted network device.

20. The access point device (20) according to claim 18 or claim 19, wherein the security means is arranged to send a proxy ARP Reply transmission back to a client device in response to an ARP request from the client device (25), said Proxy ARP Reply containing the link-layer address of one or more permitted network devices.

21. The access point device (20) according to claim 20, wherein the link-layer address is the MAC address.

22. The access point device (20) according to any preceding claim, wherein the security means is configured to accept a unicast ARP Reply from a client device (25) in response to an authorised ARP Request.

23. The access point device (20) according to any of the preceding claims, wherein the security means is configured to consider a characteristic of the data packet and based on the characteristic configure the data packet to be directed to a particular permitted area network device (40).

24. The access point device (20) according to any of the preceding claims, wherein the security means is arranged to monitor the volume of transmissions sent to a particular permitted network device (40) within a particular time and re-direct data packets to a different permitted network device according to the volume of transmissions sent to the particular permitted network device (40) within the time.

25. The access point device (20) according to claim 1, wherein the client data packet received by the access point device (20) comprises protocol fields conforming to a standard protocol and wherein the security means is arranged to alter the content of one or more of the protocol fields to produce a modified client data packet which still conforms to a standard protocol.

26. The access point device (20) according to claim 25, wherein the client data packet received by the access point device (20) and modified client data packet conform to the same standard protocol.

27. The access point device (20) according to claim 25, wherein the client data packet received by the access point device (20) and modified client data packet conform to different standard protocols.

28. The access point device (25) according to any preceding claim, wherein the security means is configured to accept a unicast ARP Reply from a client device (25) in response to an authorised ARP Request.

29. An access point device (20) according to any preceding claim, wherein the area network (1) is a public area network.

30. An area network (1) comprising the access point device (20) as claimed in any of the preceding claims.

31. A public area network comprising the access point device (20) as claimed in any one of claims 1 to 29.

32. Security means for use in an access point device (20) according to any one of claims 1 to 29, **characterised in that** said security means is arranged to configure the client data packets such that they are directed only to one or more permitted area network devices (40), said network devices (40) being access controllers which are available for general access, whereby direct communication between the client devices is blocked.

33. A computer program product for use in an access point device (20) according to any one of claims 1 to 29, said computer program product comprising the security means **characterised in** being arranged to configure the client data packets such that they are directed only to one or more permitted area network devices (40), said network devices (40) being access controllers which are available for general access, whereby direct communication between the client devices is blocked.

34. A combination of a computer program product and security means for use in an access point device (20) according to any one of claims 1 to 29, said combination comprising the security means **characterised in** being arranged to configure the client data packets such that they are directed only to one or more permitted area network devices (40), said network devices (40) being access controllers which are available for general access, whereby direct communication between the client devices is blocked.

35. A method of providing security to an area network (1), comprising arranging to receive data packets in an access point device (20) from one or more client devices (25) and transmitting them along an area network (1) **characterised in that** the client data packets are configured such that they are directed only to one or more permitted area network devices (40), said network devices (40) being access controllers which are available for general access, whereby direct communication between the client devices is blocked.

## Patentansprüche

1. Zugangspunktvorrichtung (20), die eingerichtet ist, Datenpakete von einer oder mehreren Client-Vorrichtungen (25) zu empfangen und diese entlang eines Netzes (1) zu übertragen, wobei die Zugangspunktvorrichtung (20) ein Sicherheitsmittel umfasst, **dadurch gekennzeichnet, dass** das Sicherheitsmittel eingerichtet ist, die Client-Datenpakete derart zu konfigurieren, dass diese nur an eine oder mehrere erlaubte Netzvorrichtungen (40) gerichtet sind, wobei die Netzvorrichtungen (40) Zugangssteuerungen sind, die für einen allgemeinen Zugang verfügbar sind, wodurch eine direkte Kommunikation zwischen den Client-Vorrichtungen blockiert wird.

2. Zugangspunkt (20) nach Anspruch 1, bei welchem das Sicherheitsmittel eingerichtet ist, ein Datenpaket zur Übertragung entlang des Netzes (1) vollständig neu zu erzeugen und das ursprüngliche Client-Datenpaket zu verwerfen und einen eindeutigen Klassifikator der erlaubten Netzvorrichtung (40) in das neu erzeugte Datenpaket einzufügen.

3. Zugangspunkt (20) nach Anspruch 1, bei welchem das Sicherheitsmittel eingerichtet ist, einen eindeutigen Klassifikator einer erlaubten Netzvorrichtung (40) in dem/in das Client-Datenpaket zu ersetzen/einzubringen, wie beilspielsweise eine MAC-Adresse oder IP-Adresse einer erlaubten Netzvorrichtung.

4. Zugangspunktvorrichtung (20) nach einem der vorhergehenden Ansprüche, bei welcher das Sicherheitsmittel ausgelegt ist, das Ziel des Client-Datenpakets zu beachten und eingerichtet ist, das Datenpaket nur zu konfigurieren, wenn es an eine beschränkte Netzvorrichtung gerichtet ist.

5. Zugangspunktvorrichtung (20) nach Anspruch 4, bei welcher das Sicherheitsmittel eine Liste von Klassifikatoren für erlaubte Netzvorrichtungen (40) umfasst und das Sicherheitsmittel eingerichtet ist, das Ziel eines Client-Datenpakets mit der Liste zu vergleichen und das Client-Datenpaket für die weitere Übertragung an eine erlaubte Vorrichtung (40) neu zu konfigurieren, wenn das Client-Datenpaket einen Klassifikator einer beschränkten Netzvorrichtung enthält.

6. Zugangspunktvorrichtung (20) nach einem der vorhergehenden Ansprüche, bei welcher das Sicherheitsmittel eingerichtet ist, auch die ursprüngliche Zieladresse oder Adressen des Datenpakets weiterzuleiten, so dass das Datenpaket anschließend weitergeleitet werden kann.

7. Zugangspunktvorrichtung (20) nach einem der vorhergehenden Ansprüche, bei welcher das Sicherheitsmittel ausgelegt ist, zwischen unterschiedlichen Datenpaketformen zu unterscheiden und die verschiedenen Datenpaketenformen, die an eine erlaubte Netzvorrichtung (40) gerichtet werden sollen, unterschiedlich zu modifizieren.

8. Zugangspunktvorrichtung (20) nach Anspruch 7, bei welcher das Sicherheitsmittel eingerichtet ist, zwischen Datenpaketübertragungsformen durch einen Vergleich von Client-Datenpaket-Datenfeldern oder Teilen von Datenfeldern mit denjenigen der Netz-erlaubten Übertragungsformen, die in dem Sicherheitsmittel gespeichert sind, zu unterscheiden und bei welcher das Sicherheitsmittel weiter ausgelegt ist, geeignete Modifikationen an den Client-Datenpaketen vorzunehmen, um die Übertragungsform an eine erlaubte Netzvorrichtung (40) zu richten.

9. Zugangspunktvorrichtung (20) nach Anspruch 8, bei welcher das Sicherheitsmittel eingerichtet ist, die sich unterscheidenden Übertragungsformen zu analysieren und jede von diesen sich unterscheidenden Formen anzupassen, um Datenpakete dem Netz (1) mit derselben Konstruktion und insgesamten Datenpaketlänge bereitzustellen.

10. Zugangspunktvorrichtung (20) nach Ansprüchen 1 bis 9, bei welcher das Sicherheitsmittel eingerichtet ist, das Client-Datenpaket durch das Einbringen eines Datenfeldes in das Datenpaket zu modifizieren.

11. Zugangspunktvorrichtung (20) nach Anspruch 10, bei welcher das Sicherheitsmittel eingerichtet ist, Datenpakete unter Verwendung eines Industriestandardprotokolls in ein netzspezifisches Protokoll zu konfigurieren und umgekehrt.

12. Zugangspunktvorrichtung (20) nach einem von Anspruch 7 abhängigen Anspruch, bei welcher das Sicherheitsmittel eingerichtet ist, bestimmte Datenpakete für die weitere Übertragung wahlweise zu verändern und wahlweise andere Datenpakete von der Netzübertragung auszuschließen.

13. Zugangspunktvorrichtung (20) nach Anspruch 12, bei welcher das Sicherheitsmittel ausgelegt ist, ein Antwortdatenpaket zurück an die Client-Vorrichtung in Reaktion auf eine bestimmte Form einer Datenpaketübertragung von der Client-Vorrichtung (25) zurückzusenden und/oder in Reaktion auf ein Datenpaket, das für eine beschränkte Netzvorrichtung vorgesehen ist.

14. Zugangspunktvorrichtung (20) nach Anspruch 12, bei welcher das Sicherheitsmittel ausgelegt ist, in Reaktion auf die Erkennung einer bestimmten Übertragungsform ein Antwortdatenpaket zu senden, das den Client darüber informiert, dass die bestimmte Übertragungsform nicht in dem Netz erlaubt ist oder auf das Netz (1) beschränkt ist.

15. Zugangspunktvorrichtung (20) nach einem Anspruch, der von Anspruch 7 abhängig ist, bei welcher das Sicherheitsmittel ausgelegt ist, um um eine Erlaubnis von einer Client-Vorrichtung (25) nachzusuchen, ob die Zugangspunktvorrichtung (20) eine bestimmte Übertragungsform weiterleiten darf, und wobei im positiven Falle die Zugangspunktvorrichtung (20) ausgelegt ist, derartige Übertragungen weiterzuleiten.

16. Zugangspunktvorrichtung (20) nach Anspruch 1, bei welcher die Zugangspunktvorrichtung (20) eingerichtet ist, im Namen einer Netzvorrichtung zu antworten.

17. Zugangspunktvorrichtung (20) nach Anspruch 16, bei welcher die Netzvorrichtung eine beschränkte Netzvorrichtung ist.

18. Zugangspunktvorrichtung (20) nach einem der vorhergehenden Ansprüche, wobei die Zugangspunktvorrichtung (20) ein Sicherheitsmittel umfasst, das eingerichtet ist, Abbildungsinformation von einer oder mehreren erlaubten Netzvorrichtung (40) einer Client-Vorrichtung (25) in Reaktion auf ein Client-Datenpaket bereitzustellen, das eine beschränkte Netzvorrichtung betrifft.

19. Zugangspunktvorrichtung (20) nach Anspruch 18, bei welcher das Sicherheitsmittel eingerichtet ist, eine ARP-Übertragung zurück an eine Client-Vorrichtung (25) in Reaktion auf ein Datenpaket zu senden, das für eine beschränkte Netzvorrichtung vorgesehen ist.

20. Zugangspunktvorrichtung (20) nach Anspruch 18 oder Anspruch 19, bei welcher das Sicherheitsmittel eingerichtet ist, eine Proxy-ARP-Antwort Übertragung zurück an eine Client-Vorrichtung in Reaktion auf eine ARP-Anfrage von der Client-Vorrichtung (25) zu senden, wobei die Proxy-ARP-Antwort die Linkschichtadresse einer oder mehrerer erlaubter Netzvorrichtungen enthält.

21. Zugangspunktvorrichtung (20) nach Anspruch 20, bei welcher die Linkschichtadresse die MAC-Adresse ist.

22. Zugangspunktvorrichtung (20) nach einem der vorhergehenden Ansprüche, bei welcher das Sicherheitsmittel ausgelegt ist, eine Unicast-ARP-Antwort von einer Client-Vorrichtung (25) in Reaktion auf eine autorisierte ARP-Anfrage anzunehmen.

23. Zugangspunktvorrichtung (20) nach einem der vorhergehenden Ansprüche, bei welcher das Sicherheitsmittel ausgelegt ist, eine Eigenschaft des Datenpakets zu beachten und basierend auf der Eigenschaft, das Datenpaket, das an eine bestimmte erlaubte Netzvorrichtung (40) gerichtet werden soll, zu konfigurieren.

24. Zugangspunktvorrichtung (20) nach einem der vorhergehenden Ansprüche, bei welcher das Sicherheitsmittel eingerichtet ist, das Übertragungsvolumen, das an eine bestimmte erlaubte Netzvorrichtung (40) innerhalb einer bestimmten Zeit gesendet wird, zu überwachen, und Datenpakete an eine andere erlaubte Netzvorrichtung umzuleiten in Übereinstimmung mit dem Übertragungsvolumen, das an die bestimmte erlaubte Netzvorrichtung (40) innerhalb der Zeit gesendet wird.

25. Zugangspunktvorrichtung (20) nach Anspruch 1, bei welcher das Datenpaket, das von der Zugangspunktvorrichtung (20) empfangen wurde, Protokollfelder umfasst, die einem Standardprotokoll genügen und bei welcher das Sicherheitsmittel eingerichtet ist, den Inhalt eines oder mehrerer Protokollfelder zu verändern, um ein modifiziertes Client-Datenpaket zu erzeugen, welches immer noch einem Standardprotokoll genügt.

26. Zugangspunktvorrichtung (20) nach Anspruch 25, bei welcher das Client-Datenpaket, das von der Zugangspunktvorrichtung (20) empfangen wurde, und das modifizierte Client-Datenpaket demselben Standardprotokoll genügen.

27. Zugangspunktvorrichtung (20) nach Anspruch 25, bei welcher das Client-Datenpaket, das von der Zugangspunktvorrichtung (20) empfangen wurde, und das modifizierte Client-Datenpaket unterschiedlichen Standardprotokollen genügen.

28. Zugangspunktvorrichtung (20) nach einem der vorhergehenden Ansprüche, bei welcher das Sicherheitsmittel ausgelegt ist, eine Unicast-ARP-Antwort von einer Client-Vorrichtung (25) in Reaktion auf eine autorisierte ARP-Anfrage anzunehmen.

29. Zugangspunktvorrichtung (20) nach einem der vorhergehenden Ansprüche, bei welcher das Netz (1) ein öffentliches Netz ist.

30. Netz (1), das eine Zugangspunktvorrichtung (20), wie in einem der vorhergehenden Ansprüche beansprucht ist, umfasst.

31. Öffentliches Netz, das eine Zugangspunktvorrichtung (20), wie in einem der Ansprüche 1 bis 29 beansprucht ist, umfasst.

32. Sicherheitsmittel zur Verwendung in einer Zugangspunktvorrichtung (20) nach einem der Ansprüche 1 bis 29, **dadurch gekennzeichnet, dass** das Sicherheitsmittel eingerichtet ist, die Client-Datenpakete derart zu konfigurieren, dass sie nur an eine oder mehrere erlaubte Netzvorrichtungen (40) gerichtet sind, wobei die Netzvorrichtungen (40) Zugangssteuerungen sind, die für einen allgemeinen Zugang verfügbar sind, wodurch die direkte Kommunikation zwischen den Client-Vorrichtungen blockiert wird.

33. Computerprogrammprodukt zur Verwendung in einer Zugangspunktvorrichtung (20) nach einem der Ansprüche 1 bis 29, wobei das Computerprogrammprodukt das Sicherheitsmittel umfasst, das **dadurch gekennzeichnet ist, dass** es eingerichtet ist, die Client-Datenpakete derart zu konfigurieren, dass sie nur an eine oder mehrere erlaubte Netzvorrichtungen (40) gerichtet sind, wobei die Netzvorrichtungen (40) Zugangssteuerungen sind, die für einen allgemeinen Zugang verfügbar sind, wodurch die direkte Kommunikation zwischen den Client-Vorrichtungen blockiert wird.

34. Kombination eines Computerprogrammprodukts und eines Sicherheitsmittels zur Verwendung in einer Zugangspunktvorrichtung (20) nach einem der Ansprüche 1 bis 29, wobei die Kombination das Sicherheitsmittel umfasst, welches **dadurch gekennzeichnet ist, dass** es eingerichtet ist, die Client-Datenpakete derart zu konfigurieren, dass sie nur an eine oder mehrere erlaubte Netzvorrichtungen (40) gerichtet sind, wobei die Netzvorrichtungen (40) Zugangssteuerungen sind, die für einen allgemeinen Zugang verfügbar sind, wodurch die direkte Kommunikation zwischen den Client-Vorrichtungen blockiert wird.

35. Verfahren zur Bereitstellung von Sicherheit in einem Netz (1), umfassend das Einrichten zum Empfangen von Datenpaketen in einer Zugangspunktvorrichtung (20) von einer oder mehreren Client-Vorrichtungen (25) und zum Übertragen von diesen entlang eines Netzes (1), **dadurch gekennzeichnet, dass** die Client-Datenpakete derart konfiguriert sind, dass sie nur an eine oder mehrere erlaubte Netzvorrichtungen (40) gerichtet sind, wobei die Netzvorrichtungen (40) Zugangssteuerungen sind, die für einen allgemeinen Zugang verfügbar sind, wodurch die direkte Kommunikation zwischen den Client-Vorrichtungen blockiert wird.

## Revendications

1. Dispositif de point d'accès (20) agencé pour recevoir des paquets de données d'un ou plusieurs dispositifs client (25) et les transmettre le long d'un réseau de zone (1) dans lequel le dispositif de point d'accès (20) comprend des moyens de sécurité **caractérisé en ce que** les moyens de sécurité sont agencés pour configurer les paquets de données client de sorte qu'ils soient dirigés uniquement vers un ou plusieurs dispositifs de réseau de zone permis (40), lesdits dispositifs de réseau (40) étant des contrôleurs d'accès qui sont disponibles pour un accès général, de telle manière qu'une communication directe entre les dispositifs client soit bloquée.

2. Dispositif de point d'accès (20) selon la revendication 1, dans lequel les moyens de sécurité sont agencés pour régénérer complètement un paquet de données pour transmission le long du réseau (1) et éliminer le paquet de données client d'origine et inclure un classificateur unique du dispositif de réseau de zone permis (40) dans le paquet de données régénéré.

3. Dispositif de point d'accès (20) selon la revendication 1, dans lequel les moyens de sécurité sont agencés pour substituer/insérer un classificateur unique d'un dispositif de réseau de zone permis (40), comme une adresse MAC ou une adresse IP de dispositif de réseau de zone permis, dans le paquet de données client.

4. Dispositif de point d'accès (20) selon l'une quelconque des revendications précédentes, dans lequel les moyens de sécurité sont configurés pour considérer la destination du paquet de données client, et sont agencés pour configurer le paquet de données uniquement s'il est dirigé vers un dispositif de réseau restreint.

5. Dispositif de point d'accès (20) selon la revendication 4, dans lequel les moyens de sécurité comprennent une liste de classificateurs pour des dispositifs de réseau permis (40) et les moyens de sécurité sont agencés pour comparer la destination des paquets de données client à la liste, et reconfigurer le paquet de données client pour la transmission vers l'avant à un dispositif permis (40) si le paquet de données client contient un classificateur d'un dispositif de réseau restreint.

6. Dispositif de point d'accès (20) selon l'une quelconque des revendications précédentes, dans lequel les moyens de sécurité sont agencés pour également transférer l'adresse ou les adresses de destination d'origine du paquet de données de sorte que le paquet de données puisse être transféré par la suite.

7. Dispositif de point d'accès (20) selon l'une quelconque des revendications précédentes, dans lequel les moyens de sécurité sont configurés pour différencier entre les différentes formes de paquets de données et modifier différentiellement les diverses formes de paquets de données pour qu'elles soient dirigées vers un dispositif de réseau permis (40).

8. Dispositif de point d'accès (20) selon la revendication 7, dans lequel les moyens de sécurité sont agencés pour différencier entre des formes de transmission de paquets de données par comparaison de champs de données de paquets de données client, ou de parties de champs de données, à ceux de formes de transmission permissibles de réseau enregistrées sur les moyens de sécurité, et dans lequel les moyens de sécurité sont en outre configurés pour apporter des modifications appropriées au paquet de données client pour diriger la forme de transmission vers un dispositif de réseau permis (40).

9. Dispositif de point d'accès (20) selon la revendication 8, dans lequel les moyens de sécurité sont agencés pour analyser les formes de transmission différentes et adapter chacune de ces formes différentes pour fournir des paquets de données au réseau (1) avec la même construction et la même longueur globale de paquets de données.

10. Dispositif de point d'accès (20) selon les revendications 1 à 9, dans lequel les moyens de sécurité sont agencés pour modifier le paquet de données client par l'insertion de champs de données dans le paquet de données.

11. Dispositif de point d'accès (20) selon la revendication 10, dans lequel les moyens de sécurité sont agencés pour configurer des paquets de données en utilisant un protocole de norme sectorielle dans un protocole spécifique au réseau, et vice versa.

12. Dispositif de point d'accès (20) selon l'une quelconque des revendications dépendantes de la revendication 7, dans lequel les moyens de sécurité sont agencés pour modifier sélectivement certains paquets de données pour une transmission vers l'avant, et exclure sélectivement d'autres paquets de données d'une transmission de réseau.

13. Dispositif de point d'accès (20) selon la revendication 12, dans lequel les moyens de sécurité sont configurés pour envoyer un paquet de données de réponse au dispositif client en réponse à une forme particulière de transmission de paquets de données du dispositif client (25) et/ou en réponse à un paquet de données destiné à un dispositif de réseau restreint.

14. Dispositif de point d'accès (20) selon la revendication 12, dans lequel les moyens de sécurité sont configurés pour envoyer, en réponse à l'identification d'une forme de transmission particulière un paquet de données de réponse informant le client que la forme de transmission particulière n'est pas permise, ou est restreinte, sur le réseau de zone (1).

15. Dispositif de point d'accès (20) selon l'une quelconque des revendications précédentes dépendant de la revendication 7, dans lequel les moyens de sécurité sont configurés pour rechercher une permission d'un dispositif client (25) pour savoir si le dispositif de point d'accès (20) doit transférer une forme de transmission particulière, et dans le cas positif, le dispositif de point d'accès (20) est configuré pour transférer de telles transmissions.

16. Dispositif de point d'accès (20) selon la revendication 1, dans lequel le dispositif de point d'accès (20) est agencé pour répondre pour le compte d'un dispositif de réseau.

17. Dispositif de point d'accès (20) selon la revendication 16, dans lequel le dispositif de réseau est un dispositif de réseau restreint.

18. Dispositif de point d'accès (20) selon l'une quelconque des revendications précédentes, dans lequel le dispositif de point d'accès (20) comprend des moyens de sécurité agencés pour fournir des informations de mappage d'un ou plusieurs dispositifs de réseau permis (40) à un dispositif client (25) en réponse à un paquet de données client concernant un dispositif de réseau restreint.

19. Dispositif de point d'accès (20) selon la revendication 18, dans lequel les moyens de sécurité sont agencés pour renvoyer une transmission ARP à un dispositif client (25) en réponse à un paquet de données destiné à un dispositif de réseau restreint.

20. Dispositif de point d'accès (20) selon la revendication 18 ou la revendication 19, dans lequel les moyens de sécurité sont agencés pour renvoyer une transmission de réponse ARP proxy à un dispositif client en réponse à une demande ARP du dispositif client (25), ladite réponse ARP proxy contenant l'adresse de couche de liaison d'un ou plusieurs dispositifs de réseau permis.

21. Dispositif de point d'accès (20) selon la revendication 20, dans lequel l'adresse de couche de liaison est l'adresse MAC.

22. Dispositif de point d'accès (20) selon l'une quelconque des revendications précédentes, dans lequel les moyens de sécurité sont configurés pour accepter une réponse ARP unicast d'un dispositif client (25) en réponse à une demande ARP autorisée.

23. Dispositif de point d'accès (20) selon l'une quelconque des revendications précédentes, dans lequel les moyens de sécurité sont configurés pour considérer une caractéristique du paquet de données et sur la base de la caractéristique configurer le paquet de données pour qu'il soit dirigé vers un dispositif de réseau de zone permis particulier (40).

24. Dispositif de point d'accès (20) selon l'une quelconque des revendications précédentes, dans lequel les moyens de sécurité sont agencés pour surveiller le volume de transmissions envoyées à un dispositif de réseau permis particulier (40) dans un temps particulier et rediriger des paquets de données vers un dispositif de réseau permis différent en fonction du volume de transmissions envoyées au dispositif de réseau permis particulier (40) dans le temps.

25. Dispositif de point d'accès (20) selon la revendication 1, dans lequel le paquet de données client reçu par le dispositif de point d'accès (20) comprend des champs de protocole étant conformes à un protocole de norme et dans lequel les moyens de sécurité sont agencés pour altérer le contenu d'un ou plusieurs des champs de protocole pour produire un paquet de données client modifié qui est toujours conforme à un protocole de norme.

26. Dispositif de point d'accès (20) selon la revendication 25, dans lequel le paquet de données client reçu par le dispositif de point d'accès (20) et le paquet de données client modifié sont conformes au même protocole de norme.

27. Dispositif de point d'accès (20) selon la revendication 25, dans lequel le paquet de données client reçu par le dispositif de point d'accès (20) et le paquet de données client modifié sont conformes à des protocoles de norme différents.

28. Dispositif de point d'accès (25) selon l'une quelconque des revendications précédentes, dans lequel les moyens de sécurité sont configurés pour accepter une réponse ARP unicast d'un dispositif client (25) en réponse à une demande ARP autorisée.

29. Dispositif de point d'accès (20) selon l'une quelconque des revendications précédentes, dans lequel le réseau de zone (1) est un réseau de zone public.

30. Réseau de zone (1) comprenant le dispositif de point d'accès (20) selon l'une quelconque des revendications précédentes.

31. Réseau de zone public comprenant le dispositif de point d'accès (20) selon l'une quelconque des revendications 1 à 29.

32. Moyens de sécurité destinés à un usage dans un dispositif de point d'accès (20) selon l'une quelconque des revendications 1 à 29, **caractérisés en ce que** lesdits moyens de sécurité sont agencés pour configurer les paquets de données client de sorte qu'ils soient dirigés uniquement vers un ou plusieurs dispositifs de réseau de zone permis (40), lesdits dispositifs de réseau (40) étant des contrôleurs d'accès qui sont disponibles pour un accès général, de telle manière qu'une communication directe entre les dispositifs client soit bloquée.

33. Produit de programme informatique destiné à un usage dans un dispositif de point d'accès (20) selon l'une quelconque des revendications 1 à 29, ledit produit de programme informatique comprenant les moyens de sécurité **caractérisés en ce qu'**ils sont agencés pour configurer les paquets de données client de sorte qu'ils soient dirigés uniquement vers un ou plusieurs dispositifs de réseau de zone permis (40), lesdits dispositifs de réseau (40) étant des contrôleurs d'accès qui sont disponibles pour un accès général, de telle manière qu'une communication directe entre les dispositifs client soit bloquée.

34. Combinaison d'un produit de programme informatique et de moyens de sécurité destinée à un usage dans un dispositif de point d'accès (20) selon l'une quelconque des revendications 1 à 29, ladite combinaison comprenant les moyens de sécurité **caractérisés en ce qu'**ils sont agencés pour configurer les paquets de données client de sorte qu'ils soient dirigés uniquement vers un ou plusieurs dispositifs de réseau de zone permis (40), lesdits dispositifs de réseau (40) étant des contrôleurs d'accès qui sont disponibles pour un accès général, de telle manière qu'une communication directe entre les dispositifs client soit bloquée.

35. Procédé destiné à assurer la sécurité d'un réseau de zone (1), comprenant un agencement pour recevoir des paquets de données dans un dispositif de point d'accès (20) d'un ou plusieurs dispositifs client (25) et leur transmission le long d'un réseau de zone (1), **caractérisé en ce que** les paquets de données client sont configurés de sorte qu'ils soient dirigés uniquement vers un ou plusieurs dispositifs de réseau de zone permis (40), lesdits dispositifs de réseau (40) étant des contrôleurs d'accès qui sont disponibles pour un accès général, de telle manière qu'une communication directe entre les dispositifs client soit bloquée.
